# EUROPÄISCHE PATENTSCHRIFT

(11) **EP 3 280 243 B1**
(45) Veröffentlichungstag und Bekanntmachung des Hinweises auf die Patenterteilung: **21.08.2019**
(21) Anmeldenummer: 16717280.8
(22) Anmeldetag: 01.04.2016
(51) Int. Cl.: A01C 1/06, A01C 1/08

(54) **VORRICHTUNG UND VERFAHREN ZUM BESCHICHTEN VON SAATGUT**
DEVICE AND METHOD FOR COATING SEEDS
DISPOSITIF ET PROCÉDÉ DESTINÉS À L'ENROBAGE DE SEMENCES

(30) Priorität: 09.04.2015 EP 15162932
(43) Veröffentlichungstag der Anmeldung: 14.02.2018
(73) Patentinhaber: Bayer CropScience AG, 40789 Monheim am Rhein (DE)
(72) Erfinder: WENIG, Guido, 51379 Leverkusen (DE); SCHNIER, Heinz-Friedrich, 51373 Leverkusen (DE); KEMPKES, Hartwig, 51491 Overath (DE); EHRIG, Anja, 51373 Leverkusen (DE); MANDT, Hans-Jürgen, 51061 Köln (DE)
(74) Vertreter: BIP Patents
(86) Internationale Anmeldenummer: PCT/EP2016/057223
(87) Internationale Veröffentlichungsnummer: WO 2016/162281

(56) Entgegenhaltungen:
- DE-A1- 2 551 579
- DE-U1- 9 110 546
- US-A- 1 651 390
- US-A- 5 721 012

## Beschreibung

Die Erfindung betrifft eine Vorrichtung zum Beschichten von Saatgut mit einer flüssigen Beizlösung sowie ein Verfahren, bei dem die Vorrichtung eingesetzt wird.

In der US 1,651,390 ist eine Vorrichtung zur Behandlung von Saatgut beschrieben. Die Vorrichtung umfasst ein Gehäuse mit einer darin befindlichen, rotierenden Kammer, in der Saatgut und ein Beizmaterial zur Behandlung des Saatguts miteinander vermischt werden. Perforationen in einem Wandabschnitt der Kammer sind derart ausgestaltet, dass die darin befindlichen Partikel nicht austreten, aber von Luft umströmt werden können.

Aus der DE 41 28 258 A1 ist ebenfalls eine Vorrichtung mit einem Gehäuse bekannt, das eine Kammer zur Aufnahme des Saatguts begrenzt. Die Vorrichtung umfasst rotierende Mittel zum Vermischen von Saatgut und Beizlösung in Form eines um eine vertikale Drehachse drehbaren Rotors. Durch den Rotor wird in der Kammer Saatgut in Rotation versetzt und durchmischt. Die Beizlösung wird durch Düsen auf das Saatgut aufgetragen. Die Vorrichtung umfasst einen Luftkanal zur Zuführung von Warmluft in die Kammer, um das mit der Beizlösung beschichtete Saatgut zu trocknen. Die Warmluft wird von dem Luftkanal durch eine für die Warmluft durchlässige Trenneinheit geleitet, die den Luftkanal von der Kammer trennt. Die Trenneinheit weist dabei eine Ringsiebfläche auf, durch die die Warmluft in die Kammer gelangt.

Im Betrieb der Vorrichtung, wenn durch den Rotor das Saatgut innerhalb der Kammer bewegt wird und mit der flüssigen Beizlösung besprüht wird, gleitet das Saatgut entlang der Ringsiebfläche. Dabei werden die mit der flüssigen Beizlösung benetzten einzelnen Saatkörner mittels der durch die Ringsiebfläche strömenden Warmluft getrocknet.

Mit der Zuführung von Warmluft kann die für das Beschichten und das anschließende Trocknen benötigte Zeit gegenüber einer Beschichtungsvorrichtung ohne Warmluftzufuhr deutlich reduziert werden. Doch hat sich herausgestellt, dass durch den Betrieb der Vorrichtung Staub emittiert wird, der je nach eingesetzter Beizlösung gesundheitsbedenklich sein kann und daher möglichst vermieden werden sollte. Auch setzen sich mit der Zeit die einzelnen Sieblöcher der Ringsiebfläche zu, so dass die Trocknung durch die Warmluft erschwert wird und somit der Vorrichtung weniger effizient arbeitet.

Der Erfindung liegt daher die Aufgabe zu Grunde, eine Vorrichtung zur Beschichtung von Saatgut bereit zu stellen, die möglichst wenig Staub emittiert und effizient betrieben werden kann.

Die der Erfindung zugrunde liegende Aufgabe wird mit der Merkmalskombination gemäß Anspruch 1 gelöst. Ausführungsbeispiele der Erfindung können den Unteransprüchen entnommen werden.

Gemäß Anspruch 1 umfasst die Trenneinheit wenigstens ein perforiertes Blech, das eine zur Kammer gewandte Innenseite, eine zum Luftkanal gewandte Außenseite und eine Vielzahl von Ausstellungen aufweist, wobei eine Ausstellung in Richtung der Außenseite schräg ansteigt und an der Außenseite einen zur Blechebene geneigten Öffnungseintritt bildet. Durch den Öffnungseintritt gelangt die Warmluft aus dem Luftkanal in eine der Öffnungen im perforierten Blech und strömt dann durch einen Öffnungsaustritt der Öffnung in die Kammer.

Während die Außenseite durch die nach außen stehenden Ausstellungen uneben und aufgeraut ist, wird die Innenseite des perforierten Blechs durch die Ausstellungen praktisch nicht aufgeraut. Zwar befinden sich an der Innenseite nun die einzelnen Öffnungsaustritte. Ein Öffnungsaustritt wird dabei durch einen umlaufenden Rand begrenzt, der aber an keiner Stelle an der Innenseite des Blechs aus der Blechebene hervorsteht.

Da die Ausstellung in Richtung der Außenseite schräg ansteigt, weist der den Öffnungsaustritt begrenzende Rand an einer Seite eine stark abgerundete Kante bzw. einen weichen Übergang von der Blechebene zur Ausstellung auf. Dadurch lässt sich ein deutlich reduzierter Abrieb der mit der Beizlösung benetzten bzw. beschichteten einzelnen Saatkörner erreichen, die im Betrieb der Vorrichtung an dem perforierten Blech entlang reiben. Es hat sich herausgestellt, dass bei der aus dem Stand der Technik bekannten Vorrichtung mit der Ringsiebfläche ein nicht unwesentlicher Anteil der Staubemission auf den Abrieb der Saatkörner zurückzuführen ist, der durch eben diese Ringsiebfläche verursacht wird. Die besondere Formgebung des perforierten Blechs hat sich somit als wirkungsvolle Möglichkeit herausgestellt, die Staubemission zu reduzieren.

Mit der flüssigen und in der Regel wässrigen Beizlösung lassen sich das Saatgut bzw. einzelne Saatkörner wie beispielsweise Maiskörner mit einem Pflanzenschutzmittel beschichten. Die Beizlösung kann somit Pflanzenschutzmittel und/oder auch andere Wirkstoffe/Farbstoffe enthalten, die für den Schutz oder die Entwicklung des Saatkorns relevant sein können. Insbesondere kann die Beizlösung auch Inhaltsstoffe beinhalten, die für eine gute Bindung zwischen Beizlösung und dem zu beschichtenden Saatkorn sorgen.

Das Gehäuse umfasst weiterhin gemäß Anspruch 1 ein zylindrisches Gehäuseteil, wobei in einer Mantelfläche des zylindrischen Gehäuseteils das perforierte Blech eingesetzt ist. Vorzugsweise handelt es sich bei dem zylindrischen Gehäuseteil um ein feststehendes Gehäuseteil, das sich im Betrieb der Vorrichtung nicht bewegt.

Das Gehäuse nach Anspruch 1 umfasst außerdem ein drehbares Gehäuseteil, das sich unterhalb des zylindrischen Gehäuseteils befindet. Das drehbare Gehäuseteil kann im Wesentlichen die Form eines nach unten gerichteten Kegelstumpfes aufweisen. Das drehbare Gehäuseteil ist dabei bevorzugt so gelagert, dass eine vertikale Drehachse mit der Kegelachse des Kegelstumpfes zusammenfällt. Der nach unten gerichtete Kegelstumpf kann
einen kreisrunden Boden der Kammer bilden, an dem sich die Kegelmantelfläche mit einem gewissen Öffnungswinkel anschließt. An einem oberen Rand der Kegelmantelfläche kann sich das zylindrische Gehäuseteil anschließen, wobei ein Durchmesser des zylindrischen Gehäuseteils dem Durchmesser des Kegelstumpfes am oberen Rand entsprechen kann. Befindet sich im Kegelstumpf Saatgut bestehend aus einer Vielzahl von einzelnen Saatkörnern, so werden durch Drehung des Kegelstumpfes die darin befindlichen Saatkörner ebenfalls in Drehung versetzt. Durch die sich dann einstellenden Fliehkräfte werden die einzelnen Saatkörner radial nach außen gegen die sich ebenfalls rotierenden Kegelmantelfläche gedrückt. Sie wandern dabei entlang der schräg verlaufenden Kegelmantelfläche nach oben und gleiten oder reiben dann, sich hauptsächlich in Umfangrichtung bewegend, an der feststehenden Innenwand des zylindrischen Gehäuseteils vorbei. Dabei gleiten sie auch entlang des perforierten Bleches, durch die Warmluft zum Trocknen der mit der Beizlösung benetzten Saatkörner strömt.

In einem Ausführungsbeispiel erstreckt sich eine Hauptachse der Ausstellung im Wesentlichen in Umfangsrichtung der Mantelfläche. Dies bedeutet, dass die Hauptachse in etwa parallel zu der Richtung ausgerichtet ist, in der die Saatkörner an der Innenseite des perforierten Blechs vorbei gleiten. Dabei passiert ein Saatkorn, das entlang der Innenseite des profilierten Bleches entlang gleitet, vorzugsweise zuerst eine vergleichsweise scharfe Kante des Rands des Öffnungsaustritts, die jedoch für den Abrieb nicht besonders relevant ist. Danach passiert es die stark abgerundete Kante des Rands des Öffnungsaustritts. Aufgrund der besonderen Formgebung des Rands bedingt durch die schräg ansteigende Ausstellung ergeben sich für die Saatkörner keine scharfkantigen Angriffsflächen, die zu einem hohen Abrieb führen könnten. Dies ist nicht nur förderlich für die Reduzierung der Staubemission, sondern verhindert auch, dass sich die einzelnen Löcher in dem perforierten Blech nach kurzer Zeit zusetzen. Somit kann durch die besondere Formgebung des perforierten Blechs sowohl die Staubemissionen reduziert als auch die Standzeit der luftdurchlässigen Trenneinheit erhöht werden.

Der Querschnitt des Öffnungseintritts der Ausstellung kann im Wesentlichen 3-eckig oder halbelliptisch sein. Alternativ oder zusätzlich kann die Ausstellung in der Draufsicht im Wesentlichen ebenfalls dreieckig oder halbelliptisch sein. Durch die dreieckige oder halbelliptische Form in der Draufsicht lässt sich einerseits ein im Strömungsquerschnitt großer Öffnungseintritt realisieren. Andererseits bedeutet dies für die abgerundete Kante des Rands des Öffnungseintritts, dass diese auch in Richtung des umlaufenden Rands abgerundet ist. In einer Ausführung der Erfindung wird als perforiertes Blech ein Lochblech verwendet, das unter dem Markennamen CONIDUR® derzeit in Deutschland vertrieben wird.

Der Luftkanal kann als Ringkanal ausgebildet sein, der sich in Umfangsrichtung um die Mantelfläche des zylindrischen Gehäuseteils erstreckt. Abgesehen von einer möglichen Austragsklappe kann sich der Ringkanal um den gesamten Umfang der Mantelfläche des zylindrischen Gehäuseteils (also 360°) erstrecken.

Das perforierte Blech kann ein Ringsegment sein, wobei bevorzugt mehrere Ringsegmente in Umfangsrichtung hintereinander angeordnet sind. Erstreckt sich beispielsweise der Ringkanal in Umfangsrichtung um 300°, so kann auch der Winkelbereich, der durch die in Umfangsrichtung hintereinander geschalteten Ringsegmente abgedeckt wird, ebenfalls 300° betragen. Dadurch kann nahezu im gesamten Umfang im Bereich des zylindrischen Gehäuseteils Warmluft direkt an das in der Kammer rotierende Saatgut herangeführt werden. Beispielsweise sind drei Ringsegmente vorgesehen, wobei jedes Ringsegment einen Winkelbereich von 90 bis 120° abdeckt.

Das Gehäuse kann ein Deckel umfassen, sodass die Kammer sich von oben verschließen lässt. In dem Ausführungsbeispiel, in dem das Gehäuse das zylindrische Gehäuseteil umfasst, schließt sich der Deckel an einem oberen Rand der Mantelfläche des zylindrischen Gehäuseteils an.

Es können eine oder mehrere Leitschaufeln für das Saatgut vorgesehen sein, durch die das Saatgut besser vermischt wird, um eine möglichst gleichmäßige Benetzung oder Beschichtung mit der Beizlösung sowie eine effiziente Trocknung zu erreichen. Vorzugsweise handelt es sich um feststehende Leitschaufeln, die an der Innenseite des zylindrischen Gehäuseteils oder an der Innenseite des Deckels befestigt sind. Im Betrieb der Vorrichtung, wenn sich das drehbare Gehäuseteil dreht, wird das Saatgut so weit nach oben gedrückt, dass es in die feststehenden Leitschaufeln läuft, die das Saatgut in einzelne Saatgutsträhnen unterteilt.

In einem Ausführungsbeispiel sind zwei Leitschaufeln an der Innenseite des zylindrischen Gehäuseteils angeordnet, die in Umfangsrichtung um 180° versetzt angeordnet sind. Die zwei Leitschaufeln können auch so angeordnet sein, dass sie in Drehrichtung gesehen unterschiedlich voneinander beabstandet sind, also nicht jeweils 180°, sondern beispielsweise 160° und 200° (es wird immer von einem Referenzpunkt einer Leitschaufel ausgegangen, so dass die Summe der Abstände der Leitschaufeln immer 360° beträgt). Bei drei oder mehreren Leitschaufeln kann der Abstand untereinander in Umfangsrichtung ebenfalls gleich oder unterschiedlich groß sein. So können bei drei Leitschaufeln die jeweiligen Abstände jeweils 120° betragen oder davon abweichen (zum Beispiel 100°, 120° und 140°).

Ein Innenraum der Leitschaufel kann einen Teil des Luftkanals bilden. In eine Außenwand der Leitschaufel, durch die der Innenraum der Leitschaufel begrenzt wird, kann das perforierte Blech eingesetzt sein. Somit wird die Leitschaufel mit Warmluft versorgt, die dann durch das perforierte Blech in die Kammer strömt.

Vorzugsweise stellt die Außenwand mit dem perforierten Blech die Leitwand der Leitschaufel dar. Die Leitwand ist dabei die Wand der Leitschaufel, die mit dem Saatgut im Betrieb der Vorrichtung in Kontakt tritt, an der das Saatgut vorbei gleitet und die somit dem Saatgut eine entsprechende Richtungsänderung mitgibt. In Hauptbewegungsrichtung des Saatguts gesehen kann die Leitwand an der Innenseite des zylindrischen Gehäuseteils ansetzen und leicht gekrümmt bzw. spiralförmig in radialer Richtung nach innen erstreckend sich von der zylindrischen Innenseite entfernen.

Der Luftkanal kann ein Rohrstück umfassen, das von oben in den Innenraum der Leitschaufel mündet. Alternativ oder zusätzlich kann Warmluft in den Innenraum der Leitschaufel auch durch Öffnungen treten, die an einer Rückwand der Leitschaufel angeordnet sind. In dem Ausführungsbeispiel, in dem die Leitschaufel an der Innenseite des zylindrischen Gehäuseteils befestigt ist, können die Innenseite des zylindrischen Gehäuseteils und die Rückwand plan aneinander anliegen. Das heißt, die Krümmung des zylindrischen Gehäuseteils entspricht der Krümmung der Rückwand der Leitschaufel.

Der Querschnitt der Leitschaufel kann über deren Höhe konstant sein. Das perforierte Blech muss sich dabei nicht über die gesamte Höhe der Leitwand, sondern kann sich beispielsweise nur über ein unteres Drittel oder über eine untere Hälfte der Leitwand erstrecken. Somit tritt die Warmluft nur in dem Bereich aus der Leitwand, der im Betrieb der Vorrichtung unmittelbar mit dem Großteil des Saatguts in Kontakt tritt.

Zum Zerstäuben oder feinen Verteilen der flüssigen Beizlösung kann eine rotierende Zerstäuberscheibe vorgesehen sein. Die Drehachse der Zerstäuberscheibe fällt vorzugsweise mit der Drehachse des drehbaren Gehäuseteils zusammen. Im Betrieb wird vorzugsweise die flüssige Beizlösung von oben auf die rotierende Zerstäuberscheibe aufgebracht. Durch die Rotation der Zerstäuberscheibe wird die darauf treffende Beizlösung in kleine Tröpfchen zerstäubt. Die Tröpfchen werden durch die Rotation der Zerstäuberscheibe radial nach außen gegen das Saatgut geschleudert. Die Ebene, in der die Zerstäuberscheibe liegt, kann sich dabei in dem Bereich des Kegelstumpfes befinden.

Die Vorrichtung kann eine Luftaufbereitung umfassen, die einen Eingang für Abluft aus der Kammer und einen Ausgang aufweist, der mit dem Luftkanal verbunden ist. Somit ist ein geschlossener Kreislauf der Luft möglich, die durch die Kammer geleitet wird. Vorzugsweise weist die Luftaufbereitung eine Filtereinheit zur Staubabscheidung, einen Wasserabscheider und einen Lufterhitzer auf. Die staubbelastete Abluft gelangt aus der Kammer bevorzugt zunächst in die Filtereinheit der Luftaufbereitung, wo Staubpartikel von dem Luftstrom abgeschieden werden. Danach gelangt die derart gereinigte Luft in einen Wasserabscheider, wobei vorzugsweise durch Temperaturabsenkung Wasser auskondensiert wird. Danach gelangt die gereinigte und getrocknete Luft zu einem Lufterhitzer, um die Luft wieder auf die vorgesehene Trocknungstemperatur zu bringen. Danach wird die gefilterte, getrocknete und wieder erwärmte Luft in den Luftkanal gegeben, von wo sie durch das perforierte Blech zur Trocknung des Saatguts in der Kammer eingesetzt wird. Da bereits in der Kammer wenig Abrieb und somit wenig Staub entsteht, ist der Anfall von Staubpartikeln in der Filtereinheit entsprechend gering. Durch den geschlossenen Luftkreislauf lässt sich nicht nur eine energieeffiziente Trocknung erreichen, sondern es ist auch möglich, wichtige Verfahrensparameter wie Warmlufttemperatur, Restfeuchte der Warmluft etc. unabhängig von Lage und Ort der Vorrichtung sowie der dort herrschenden Witterungsbedingungen zu machen.

Ein Teil der gefilterten, getrockneten und wieder erwärmten Luft aus der Luftaufbereitung kann in die Kammer durch einen Ringspalt zwischen dem zylindrischen Gehäuseteil und dem drehbaren Gehäuseteil geführt werden. Dadurch kann vermieden werden, dass durch den Ringspalt aus der Kammer die staubbelastete Abluft in die Umgebung entweicht. Zudem lässt sich durch die Zuführung der konditionierten Luft aus der Luftaufbereitung durch den Ringspalt die Effektivität der Trocknung weiter steigern.

Eine weitere Aufgabe der Erfindung, die Bereitstellung eines Verfahrens zum Beschichten von Saatgut, wird mit Anspruch 13 gelöst. Gemäß Anspruch 13 wird eine Vorrichtung in einer der hier beschriebenen Ausführungen verwendet, wobei die rotierenden Mittel zum Vermischen von Saatgut und Beizlösung in Rotation versetzt werden, wobei durch die rotierenden Mittel das Saatgut entlang der Innenseite des perforierten Bleche bewegt wird und wobei die schräg ansteigenden Ausstellungen der Hauptbewegungsrichtung des Saatguts im Wesentlichen entgegengesetzt sind, sodass verhindert wird, dass Saatgut bei der Bewegung entlang der Innenseite des Blechs gegen scharfe Kanten stößt. Die Drehrichtung der rotierenden Mittel und somit die Drehrichtung des Saatguts und die Ausstellungen sind so orientiert, dass das Saatgut an der Innenseite des perforierten Blechs erst entlang der vergleichsweise scharfen Kante des Rands des Öffnungsaustritts gleitet, wobei diese scharfe Kante aber in Bewegungsrichtung gesehen kein Hindernis darstellt. Nach Passieren dieser eher unkritischen Kante läuft das Saatkorn an der stärker abgerundeten Kante des Rands vorbei. Durch eine derartige Orientierung des perforierten Bleches in Bezug auf die Hauptbewegungsrichtung des Saatguts kann der Abrieb des Saatguts und somit die Staubemission deutlich reduziert werden. Zudem kann die Gefahr, dass das perforierte Blech sich mit dem Abrieb zusetzt, deutlich reduziert werden.

Anhand der in den Figuren dargestellten Ausführungsbeispiele wird die Erfindung näher erläutert. Es zeigen:
- Figur 1: schematisch eine Vorrichtung zum Beschichten von Saatgut;
- Figur 2: eine Draufsicht einer Kammer der Vorrichtung der Figur 1;
- Figur 3: schematisch eine Ausstellung eines perforiertes Bleches, das in der Vorrichtung der Figur 1 verwendet wird;
- Figur 4: den Schnitt entlang der Linie IV-IV in Figur 3;
- Figur 5: einen Ausschnitt des perforierten Bleches in der Draufsicht.

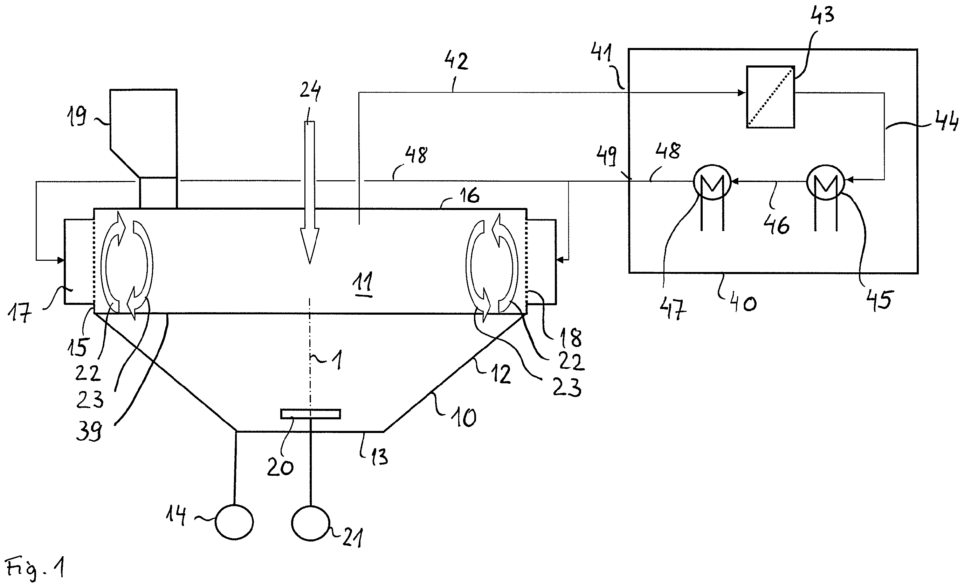

Die Figur 1 zeigt schematisch eine Vorrichtung zum Beschichten von Saatgut. Die Vorrichtung umfasst ein Gehäuse 10, das eine Kammer 11 zur Aufnahme des Saatguts definiert. Des Weiteren umfasst die Vorrichtung eine Luftaufbereitung 40, auf die später noch näher eingegangen wird.

Das Gehäuse 10 umfasst ein drehbares Gehäuseteil 12, das in dem hier dargestellten Ausführungsbeispiel als Kegelstumpf ausgebildet ist. Das drehbare Gehäuseteil oder der Kegelstumpf 12 weist eine untere kreisförmige Stirnfläche 13 auf, die auch als Kammerboden bezeichnet werden kann. Das Gehäuseteil 12 ist um eine vertikale Drehachse 1 drehbar gelagert und wird durch einen Motor 14 angetrieben. Über dem drehbaren Gehäuseteil 12 ist ein feststehendes, zylindrisches Gehäuseteil 15 angeordnet, dessen Innendurchmesser dem Durchmesser des konisch geformten Gehäuseteils 12 am oberen Rand entspricht. Nach oben hin ist die Kammer 11 durch einen Deckel 16 verschlossen.

In Umfangsrichtung erstreckt sich um das zylindrische Gehäuseteil 15 ein Luftkanal 17 in Form eines Ringkanals. Zwischen dem Luftkanal 17 und der Kammer 11 ist eine luftdurchlässige Trenneinheit vorgesehen, die ein perforiertes Blech 18 umfasst. Durch das perforierte Blech 18 kann Warmluft aus dem Luftkanal 17 in die Kammer 11 strömen, um das dort befindliche Saatgut zu trocknen. Das Blech 18 verhindert aber, dass Saatgut von der Kammer 11 in den Luftkanal 17 gelangt.

Mit Saatgut aus einem Bunker 19 lässt sich die Kammer 11 befüllen. Beispielsweise kann die Kammer 11 so mit Saatgut befüllt sein, dass das Saatgut ungefähr die Hälfte des durch den Kegelstumpf 12 definierten Volumens einnimmt. Bei nicht rotierendem Gehäuseteil 12 würde eine Zerstäuberscheibe 20 für die Beizlösung vollständig durch das Saatgut verdeckt sein. Die Zerstäuberscheibe 20 wird wie das drehbare Gehäuseteil 12 durch einen Motor 21 angetrieben. Die Zerstäuberscheibe 20 dreht sich dabei auch um die Drehachse 1.

Wenn nun das untere drehbare Gehäuseteil 12 durch den Motor 14 in Drehung versetzt wird, drehen sich auch die einzelnen in dem Gehäuseteil 12 befindlichen Saatkörner. Durch die Fliehkraft werden diese gegen die Kegelmantelfläche gedrückt und wandern entlang der Kegelmantelfläche nach oben in Richtung des zylindrischen Gehäuseteils 15. Die Saatkörner werden dabei an dem perforierten Blech 18 vorbeigeführt, wobei die Hauptbewegung der einzelnen Saatkörner in Umfangsrichtung gerichtet ist. Dies bedeutet, dass bezogen auf das feststehende perforierte Blech 18 die einzelnen Saatkörner in Umfangsrichtung an diesem entlang gleiten bzw. -reiben. Die einzelnen Saatkörner verlieren dabei an Bewegungsenergie, sodass sie, wie durch die Pfeile 22, 23 angedeutet, wieder zurück in den rotierenden Gehäuseteil 12 fallen. Dort werden sie wieder in Umfangsrichtung beschleunigt und bedingt durch die Fliehkraft gegen die Innenwand des zylindrischen Gehäuseteils 15 bzw. gegen das perforierte Blech 18 gedrückt. Die durch die Pfeile 22, 23 angedeutete Umwälzung des Saatguts kann durch hier nicht dargestellte Leitschaufeln unterstützt werden.

Zum Beschichten des Saatguts wird die Beizlösung von oben durch den Deckel auf die nun freigelegte Zerstäuberscheibe 20 aufgetragen. Der Eintrag der Beizlösung durch den Deckel 16 ist durch den Pfeil 24 dargestellt. Die flüssige Beizlösung trifft/tropft dabei von oben auf die rotierende Zerstäuberscheibe 20, durch die die Beizlösung in viele kleine Tröpfchen zerstäubt wird. Durch die Fliehkraft werden die einzelnen Tröpfchen radial nach außen gegen das Saatgut geschleudert, das sich, wie oben beschrieben, an der Kegelmantelfläche bzw. an der Innenseite des zylindrischen Gehäuseteils 15 befindet. Durch die Umwälzung des Saatguts innerhalb der Kammer 11 erfolgt eine gute Durchmischung des Saatguts mit der Beizlösung, so dass die einzelnen Saatkörner gleichmäßig mit der Beizlösung beschichtet werden. Durch die Warmluft aus dem Luftkanal 17 wird das Saatgut mit der darauf aufgetragenen Beizlösung getrocknet.

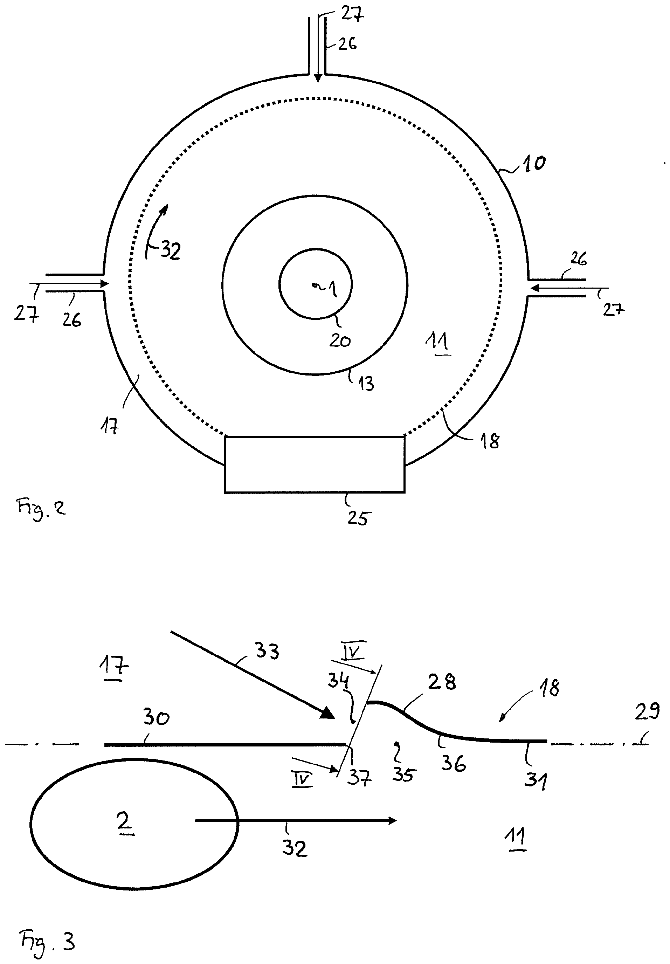

Figur 2 zeigt die Kammer 11 von oben. Zu erkennen ist der im Wesentlichen rotationssymmetrische Aufbau des Gehäuses 10. Über eine Austragsklappe 25 lässt sich die Kammer 11 nach erfolgter Beschichtung und Trocknung entleeren. Das perforierte Blech 18 ist ringförmig ausgebildet und erstreckt sich, abgesehen von dem durch die Austragsklappe 25 abgedeckten Winkelbereich, über den gesamten Umfang des zylindrischen Gehäuseteils 15. Auch der Luftkanal 17, der das zylindrische Gehäuseteil 15 radial umgreift, erstreckt sich im Wesentlichen über den gesamten Umfang des Gehäuseteils 15. Über drei Kanaleingänge 26, die um 90° versetzt angeordnet sind, gelangt Warmluft (siehe Pfeil 27) in den Luftkanal 17 und tritt dann durch das Blech 18 in die Kammer 11.

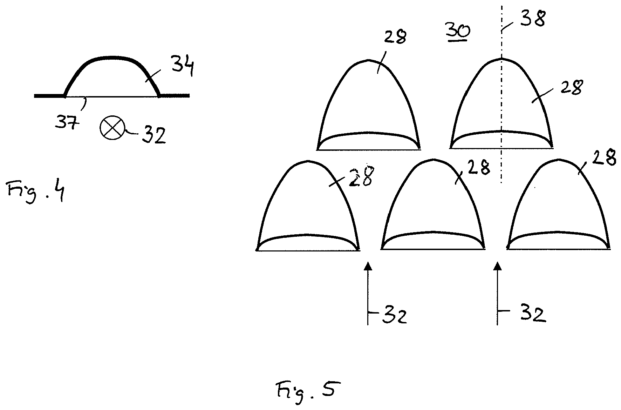

Die Struktur des perforierten Bleches 18 wird anhand der Figuren 3 bis 5 näher beschrieben. Das perforierte Blech 18 umfasst eine Vielzahl von in einem Muster angeordneten Ausstellungen 28 (siehe Figur 5). Figur 3 zeigt einen kleinen Ausschnitt des perforierten Blechs 18. Zu erkennen ist eine einzelne Ausstellung 28 im Schnitt, die sich aus einer Blechebene 29 heraus erstreckt. Die Ausstellung zeigt dabei in Richtung einer Außenseite 30. In Einbaulage ist die Außenseite 30 des perforierten Blechs 18 zum Luftkanal 17 gewandt. Eine Innenseite 31 des perforierten Blechs 18 ist zur Kammer 11 gerichtet. Sie ist frei von etwaigen Erhebungen und daher im Vergleich zur Außenseite 30 glatt und eben. Figur 3 zeigt ein einzelnes Saatkorn 2, das sich in der Kammer 11 befindet. Der Pfeil 32 in Figur 3 deutet die Hauptbewegungsrichtung des Saatkorns 2 in Bezug auf das feststehende Blech 18 an. Die Hautbewegungsrichtung 32 des Saatkorns 2 ist in erster Linie eine Drehbewegung um die Drehachse 1 (vgl. Pfeil 32 in Figur 2). Das Saatkorn 2 wird durch die Fliehkräfte gegen die Innenseite 31 des perforierten Blechs 18 gedrückt und reibt somit an diesem entlang.

In Richtung des Durchflusses der Warmluft durch das perforierte Blech 18 gesehen (vergleiche Pfeil 33), entsteht durch die Ausstellung 28 ein Öffnungseintritt 34, der in Figur 4 von vorne dargestellt ist. Der Öffnungseintritt 34 ist zur Blechebene 29 im Ausführungsbeispiel der Figur 3 um ca. 70° geneigt. Er weist einen in etwa halbelliptischen Querschnitt auf (siehe Figur 4). Figur 4 zeigt zudem die Hauptbewegungsrichtung 32 des Saatkorns 2, die in der Darstellung der Figur 4 in die Zeichenebene hineinragt. Durch die Ausstellung 28 bildet sich in der Blechebene 29 an der Innenseite 31 ein ebenfalls in etwa halbelliptischer Öffnungsaustritt 35, dessen Grundkontur aus der Darstellung der Figur 5 deutlich wird. Durch die zur Außenseite 30 schräg ansteigende Ausstellung 28 und durch die halbelliptische Grundform des in der Blechebene 29 liegenden Öffnungsaustritt 35 ergibt sich in Hauptbewegungsrichtung 32 des Saatkorns 2 gesehen eine hintere Kante 36, die stark abgerundet ist bzw. für einen weichen Übergang zwischen der Blechebene 29 und der Ausstellung 28 sorgt. Wenn das Saatkorn 2 entlang des perforierten Blechs 18 bewegt wird und durch die Fliehkraft gegen dieses gedrückt wird, passiert es zunächst eine untere Kante 37 des Öffnungseintritts 34. Diese Kante 37 ist vergleichsweise scharfkantig, sie spielt aber für den Abrieb des Saatkorns eine untergeordnete Rolle. Danach trifft das Saatkorn 2 auf die hintere Kante 36, die aber stark abgerundet ist und somit das Saatkorn vor Abrieb schont. Auch können sich aufgrund der weichen Formgebung an der Kante 36 keine Abriebreste bilden, die dazu führen könnten, dass sich die Öffnung zwischen Außenseite 30 und Innenseite 31 zusetzt.

Aus Figur 5, die die Außenseite 30 des perforierte Blechs 18 in der Draufsicht zeigt, wird deutlich, dass eine Hauptachse 38 einer jeden Ausstellung 28 parallel oder im Wesentlichen parallel zur Hauptbewegungsrichtung 32 des Saatguts 2 ausgerichtet. Auch wird deutlich, dass in Hauptbewegungsrichtung 32 gesehen die für den Abrieb kritische hintere Kante 36 jeweils entsprechend stark abgerundet ist und somit hinsichtlich Abrieb entschärft ist.

Die in Figur 1 schematisch dargestellte Luftaufbereitung 40 weist einen Eingang 41 für die Abluft 42 aus der Kammer 11 auf. Die Abluft 42 wird einer Filtereinheit 43 zugeführt, in der die Staubpartikel vom Luftstrom getrennt werden. Die derart gefilterte Luft 44 gelangt zu einem Wasserabscheider 45. Dort wird dem Luftstrom 44 Wärme entzogen, sodass Wasser auskondensiert. Der gefilterte und getrocknete Luftstrom 46 wird in einem Lufterhitzer 47 erhitzt und auf die für die Trocknung des Saatguts in der Kammer 11 gewünschte Temperatur gebracht. Die gereinigte, getrocknete und erhitzt Luft 48 verlässt die Luftaufbereitung 40 an einem Ausgang 49. Der Ausgang 49 ist mit dem Luftkanal 17 verbunden, durch den die erhitzte Luft 48 über das perforierte Blech 18 in die Kammer 11 strömt.

Der Ausgang 49 kann zudem, soweit ein solcher vorhanden ist, mit einem Ringspalt 39 verbunden sein, der sich zwischen dem zylindrischen Gehäuseteil 15 und dem rotierendem Gehäuseteil 12 befindet. Dadurch kann die gereinigte, getrocknete und erhitzte Luft 48 durch den Ringspalt 39 in die Kammer 11 gelangen. Durch die Zuführung der konditionierten Luft 48 durch den Ringspalt 39 lässt sich einerseits ein unerwünschter Austritt von Abluft 42 durch den Ringspalt 39 vermeiden und andererseits die Trocknung des Saatguts weiter verbessern.

### Bezugszeichenliste

- 1: Drehachse
- 2: Saatkorn

- 10: Gehäuse
- 11: Kammer
- 12: rotierendes Gehäuseteil
- 13: Stirnfläche
- 14: Motor
- 15: zylindrisches Gehäuseteil
- 16: Deckel
- 17: Luftkanal
- 18: perforiertes Blech
- 19: Bunker
- 20: Zerstäuberscheibe
- 21: Motor
- 22: Pfeil
- 23: Pfeil
- 24: Pfeil
- 25: Austragsklappe
- 26: Kanalöffnung
- 27: Pfeil
- 28: Ausstellung
- 29: Blechebene
- 30: Außenseite
- 31: Innenseite
- 32: Hauptbewegungsrichtung
- 33: Pfeil
- 34: Öffnungseintritt
- 35: Öffnungsaustritt
- 36: Kante
- 37: Kante
- 38: Hauptachse
- 39: Ringspalt
- 40: Luftaufbereitung
- 41: Eingang
- 42: Abluft
- 43: Filtereinheit
- 44: gefilterte Luft
- 45: Wasserabscheider
- 46: getrocknete Luft
- 47: Lufterhitzer
- 48: erhitzte Luft
- 49: Ausgang

## Patentansprüche

1. Vorrichtung zum Beschichten von Saatgut mit einer flüssigen Beizlösung, mit einem Gehäuse (10), das eine Kammer (11) zur Aufnahme des Saatguts begrenzt, mit rotierenden Mitteln zum Vermischen von Saatgut und Beizlösung, mit einem Luftkanal (17) zur Zuführung von Warmluft in die Kammer (11), und mit einer für die Warmluft durchlässigen Trenneinheit, die den Luftkanal (17) von der Kammer (11) trennt, wobei die Trenneinheit wenigstens ein perforiertes Blech (18) umfasst, das eine zur Kammer (11) gewandte Innenseite (31), eine zum Luftkanal (17) gewandte Außenseite (30) und eine Vielzahl von Ausstellungen (28) aufweist, wobei eine Ausstellung (28) in Richtung der Außenseite (30) schräg ansteigt und an der Außenseite (30) einen zur Blechebene (29) geneigten Öffnungseintritt (34) bildet, **dadurch gekennzeichnet, dass** das Gehäuse (10) ein im Wesentlichen zylindrisches Gehäuseteil (15) umfasst, dass in einer Mantelfläche des zylindrischen Gehäuseteils (15) das perforierte Blech (18) eingesetzt ist, und dass das Gehäuse (10) ein drehbares Gehäuseteil (12) umfasst, das unterhalb des zylindrischen Gehäuseteils (15) angeordnet ist.

2. Vorrichtung nach Anspruch 1, **dadurch gekennzeichnet, dass** das drehbare Gehäuseteil (12) im Wesentlichen die Form eines nach unten ausgerichteten Kegelstumpf aufweist.

3. Vorrichtung nach einem der Ansprüche 1 oder 2, **dadurch gekennzeichnet, dass** eine Hauptachse (38) der Ausstellung (28) sich im Wesentlichen in Umfangsrichtung der Mantelfläche des zylindrischen Gehäuseteils (15) erstreckt.

4. Vorrichtung nach einem der Ansprüche 1 bis 3, **dadurch gekennzeichnet, dass** der Querschnitt des Öffnungseintritts (34) der Ausstellung (28) im Wesentlichen dreieckig oder halbelliptisch ist.

5. Vorrichtung nach einem der Ansprüche 1 bis 4, **dadurch gekennzeichnet, dass** die Ausstellung (28) in der Draufsicht im Wesentlichen dreieckig oder halbelliptisch ist.

6. Vorrichtung nach einem der Ansprüche 1 bis 5, **dadurch gekennzeichnet, dass** der Luftkanal (17) als Ringkanal ausgebildet ist, der sich in Umfangsrichtung um die Mantelfläche des zylindrischen Gehäuseteils (15) erstreckt.

7. Vorrichtung nach einem der Ansprüche 1 bis 6, **dadurch gekennzeichnet, dass** das perforierte Blech (18) ein Ringsegment ist.

8. Vorrichtung nach einem der Ansprüche 1 bis 7, **dadurch gekennzeichnet, dass** das Gehäuse (10) einen Deckel (16) umfasst, der an einem oberen Rand des zylindrischen Gehäuseteils (15) angeordnet ist.

9. Vorrichtung nach einem der Ansprüche 1 bis 8, **dadurch gekennzeichnet, dass** wenigstens eine Leitschaufel für das in der Kammer (11) befindliche Saatgut vorgesehen sind.

10. Vorrichtung nach Anspruch 9, **dadurch gekennzeichnet, dass** ein Innenraum der Leitschaufel einen Teil des Luftkanals bildet und dass in eine Außenwand der Leitschaufel das perforierte Blech eingesetzt ist.

11. Vorrichtung nach einem der Ansprüche 1 bis 10, **dadurch gekennzeichnet, dass** eine rotierende Zerstäuberscheibe (20) zum Zerstäuben der flüssigen Beizlösung vorgesehen ist.

12. Vorrichtung nach einem der Ansprüche 1 bis 11, **dadurch gekennzeichnet, dass** eine Luftaufbereitung (40) vorgesehen ist, die einen Eingang (41) für Abluft (42) aus der Kammer (11) und einen Ausgang (49) aufweist, der mit dem Luftkanal (17) verbunden ist.

13. Verfahren zum Beschichten von Saatgut unter Verwendung einer Vorrichtung nach einem der Ansprüche 1 bis 12, **dadurch gekennzeichnet, dass** die rotierende Mittel zum Vermischen von Saatgut und Beizlösung in Rotation versetzt werden, wobei durch die rotierenden Mittel das Saatgut entlang der Innenseite (31) des perforierten Blechs (18) bewegt wird, und wobei die schräg ansteigenden Ausstellungen (28) einer Hauptbewegungsrichtung (32) des Saatguts im Wesentlichen entgegen gesetzt sind, so dass verhindert wird, dass Saatgut bei der Bewegung entlang der Innenseite (31) des Blechs (18) gegen scharfe Kanten stößt.

## Claims

1. Device for coating seeds with a liquid dressing solution, having a housing (10), which delimits a chamber (11) for receiving the seeds, having rotating means for mixing the seeds and dressing solution, having an air duct (17) for feeding hot air into the chamber (11), and having a separating unit, which is permeable to the hot air and separates the air duct (17) from the chamber (11), wherein the separating unit comprises at least one perforated metal sheet (18), which has an inner side (31), facing the chamber (11), an outer side (30), facing the air duct (17), and a multiplicity of projections (28), wherein one projection (28) rises obliquely in the direction of the outer side (30) and on the outer side (30) forms an opening inlet (34) that is inclined in relation to the plane (29) of the sheet metal, **characterized in that** the housing (10) comprises a substantially cylindrical housing part (15), **in that** the perforated metal sheet is inserted in a lateral surface of the cylindrical housing part (15), and **in that** the housing (10) comprises a rotatable housing part (12), which is arranged below the cylindrical housing part (15).

2. Device according to Claim 1, **characterized in that** the rotatable housing part (12) has substantially the form of a downwardly directed truncated cone.

3. Device according to either of Claims 1 and 2, **characterized in that** a main axis (38) of the projection (28) extends substantially in the circumferential direction of the lateral surface of the cylindrical housing part (15).

4. Device according to one of Claims 1 to 3, **characterized in that** the cross section of the opening inlet (34) of the projection (28) is substantially triangular or semi-elliptical.

5. Device according to one of Claims 1 to 4, **characterized in that** the projection (28) is substantially triangular or semi-elliptical in plan view.

6. Device according to one of Claims 1 to 5, **characterized in that** the air duct (17) is formed as an annular duct which extends in the circumferential direction around the lateral surface of the cylindrical housing part (15).

7. Device according to one of Claims 1 to 6, **characterized in that** the perforated metal sheet (18) is a ring segment.

8. Device according to one of Claims 1 to 7, **characterized in that** the housing (10) comprises a cover (16), which is arranged on an upper rim of the cylindrical housing part (15).

9. Device according to one of Claims 1 to 8, **characterized in that** at least one guide vane is provided for the seeds located in the chamber (11).

10. Device according to Claim 9, **characterized in that** an interior space of the guide vane forms part of the air duct and **in that** the perforated metal sheet is inserted in an outer wall of the guide vane.

11. Device according to one of Claims 1 to 10, **characterized in that** a rotating atomizer disc (20) is provided for atomizing the liquid dressing solution.

12. Device according to one of Claims 1 to 11, **characterized in that** in air treatment system (40) is provided, having an input (41) for discharged air (42) from the chamber (11) and an output (49), which is connected to the air duct (17).

13. Method for coating seeds by using a device according to one of Claims 1 to 12, **characterized in that** the rotating means for mixing seeds and dressing solution is set in rotation, wherein the seeds are moved by the rotating means along the inner side (31) of the perforated metal sheet (18), and wherein the obliquely rising projections (28) are substantially opposed to a main direction of movement (32) of the seeds, so that the seeds are prevented from hitting sharp edges during the movement along the inner side (31) of the metal sheet (18).

## Revendications

1. Dispositif pour l'enrobage de semences avec une solution de poudrage liquide, avec un boîtier (10), qui limite une chambre (11) destinée à contenir les semences, avec des moyens rotatifs pour mélanger les semences et la solution de poudrage, avec un canal d'air (17) pour amener de l'air chaud dans la chambre (11), et avec une unité de séparation perméable à l'air chaud, qui sépare le canal d'air (17) de la chambre (11), dans lequel l'unité de séparation comprend au moins une tôle perforée (18), qui présente un côté intérieur tourné vers la chambre (11), un côté extérieur (30) tourné vers le canal d'air (17) et une multiplicité d'alvéoles (28), dans lequel une alvéole (28) monte en oblique en direction du côté extérieur (30) et forme sur le côté extérieur (30) une entrée d'ouverture (34) inclinée vers le plan de la tôle (29), **caractérisé en ce que** le boîtier (10) comprend une partie de boîtier essentiellement cylindrique (15), **en ce que** la tôle perforée (18) est insérée dans une surface latérale de la partie de boîtier cylindrique (15), et **en ce que** le boîtier (10) comprend une partie de boîtier tournante (12), qui est disposée en dessous de la partie de boîtier cylindrique (15).

2. Dispositif selon la revendication 1, **caractérisé en ce que** la partie de boîtier tournante (12) présente essentiellement la forme d'un tronc de cône orienté vers le bas.

3. Dispositif selon une des revendications 1 ou 2, **caractérisé en ce qu'**un axe principal (38) de l'alvéole (28) s'étend essentiellement dans la direction périphérique de la surface latérale de la partie de boîtier cylindrique (15).

4. Dispositif selon l'une quelconque des revendications 1 à 3, **caractérisé en ce que** la section transversale de l'entrée d'ouverture (34) de l'alvéole (28) est essentiellement triangulaire ou semi-elliptique.

5. Dispositif selon l'une quelconque des revendications 1 à 4, **caractérisé en ce que** l'alvéole (28) est essentiellement triangulaire ou semi-elliptique dans une vue en plan.

6. Dispositif selon l'une quelconque des revendications 1 à 5, **caractérisé en ce que** le canal d'air (17) est formé par un canal annulaire, qui s'étend en direction périphérique autour de la surface latérale de la partie de boîtier cylindrique (15).

7. Dispositif selon l'une quelconque des revendications 1 à 6, **caractérisé en ce que** la tôle perforée (18) est un segment annulaire.

8. Dispositif selon l'une quelconque des revendications 1 à 7, **caractérisé en ce que** le boîtier (10) comprend un couvercle (16), qui est disposé sur un bord supérieur de la partie de boîtier cylindrique (15) .

9. Dispositif selon l'une quelconque des revendications 1 à 8, **caractérisé en ce qu'**il est prévu au moins une aube directrice pour les semences se trouvant dans la chambre (11).

10. Dispositif selon la revendication 9, **caractérisé en ce qu'**un espace intérieur de l'aube directrice forme une partie du canal d'air et **en ce que** la tôle perforée est insérée dans une paroi extérieure de l'aube directrice.

11. Dispositif selon l'une quelconque des revendications 1 à 10, **caractérisé en ce qu'**il est prévu un disque de pulvérisation tournant (20) pour la pulvérisation de la solution de poudrage liquide.

12. Dispositif selon l'une quelconque des revendications 1 à 11, **caractérisé en ce qu'**il est prévu une préparation de l'air (40), qui présente une entrée (41) pour l'air d'évacuation (42) hors de la chambre (11) et une sortie (49), qui est raccordée au canal d'air (17).

13. Procédé d'enrobage de semences avec utilisation d'un dispositif selon l'une quelconque des revendications 1 à 12, **caractérisé en ce que** l'on met en rotation les moyens rotatifs pour mélanger les semences et la solution de poudrage, dans lequel on déplace à l'aide des moyens rotatifs les semences le long du côté intérieur (31) de la tôle perforée (18), et dans lequel les alvéoles croissantes en oblique (28) sont disposées essentiellement en opposition à la direction de mouvement principale (32) des semences, de telle sorte que l'on empêche que des semences heurtent des arêtes vives lors du mouvement le long du côté intérieur (31) de la tôle (18).
